# EUROPÄISCHE PATENTSCHRIFT

(11) **EP 3 180 278 B1**
(45) Veröffentlichungstag und Bekanntmachung des Hinweises auf die Patenterteilung: **31.10.2018**
(21) Anmeldenummer: 15733350.1
(22) Anmeldetag: 22.06.2015
(51) Int. Cl.: B65G 45/16

(54) **FÖRDERBAND-ABSTREIFVORRICHTUNG**
CONVEYOR BELT SCRAPING DEVICE
DISPOSITIF DE RACLAGE DE BANDE TRANSPORTEUSE

(30) Priorität: 11.08.2014 DE 202014006330 U; 05.09.2014 DE 202014007229 U
(43) Veröffentlichungstag der Anmeldung: 21.06.2017
(73) Patentinhaber: F.E. Schulte Strathaus GmbH & Co. Kg, 59457 Werl (DE)
(72) Erfinder: SCHULTE STRATHAUS, Michael, 58739 Wickede/Ruhr (DE)
(74) Vertreter: Von Rohr Patentanwälte Partnerschaft mbB
(86) Internationale Anmeldenummer: PCT/EP2015/001251
(87) Internationale Veröffentlichungsnummer: WO 2016/023604

(56) Entgegenhaltungen:
- EP-A1- 0 566 486
- WO-A1-01/23284
- WO-A2-2008/027732
- DE-T2-602004 005 771
- DE-U1-202012 010 945
- US-A- 4 768 645
- US-A- 4 825 997
- US-A- 6 056 112

## Beschreibung

Die Erfindung betrifft ein Verfahren zum Betreiben einer Förderband-Abstreifvorrichtung mit den Merkmalen des Oberbegriffs von Anspruch 1.

Förderbandanlagen verwenden ein sich bewegendes Förderband zum Transportieren von Sand, Kies, Kohle und anderen Schüttgütern von einem Ort zu einem anderen Ort. Wenn das Schüttgut von dem Förderband am Ende an einer Umlenkwalze herabfällt, bleibt manchmal ein Rest des Schüttgutes an dem Förderband haften. Eine Förderband-Abstreifvorrichtung der in Rede stehenden Art dient dazu, das am Förderband anhaftende restliche Schüttgut abzustreifen.

Normalerweise befindet sich eine erste Förderband-Abstreifvorrichtung unmittelbar an der Umlenkwalze des Förderbandes als sog. Primärabstreifer. Am Untertrum des Förderbandes befindet sich in Laufrichtung des Förderbandes hinter dem Primärabstreifer meist noch ein Sekundärabstreifer.

Die meist mehreren nebeneinander angeordneten Abstreifsegmente einer Förderband-Abstreifvorrichtung sind auswechselbar an einer meist drehbar und häufig auch zusätzlich linear verstellbaren Tragwelle befestigt, die sich quer zum Förderband erstreckt.

Mit einem oder beiden Enden der Tragwelle ist eine bzw. jeweils eine Spannvorrichtung verbunden, die eine Hebelkonstruktion oder vorgespannte Federn aufweist, um die notwendige Vorspannung zu erzeugen. Mitunter weist eine Spannvorrichtung auch einen Antriebsmotor auf. Der Antriebsmotor wird dann von einer elektrischen oder elektronischen Steuerung angesteuert.

Wenn vorliegend nur von einem Antriebsmotor die Rede ist, so schließt das eine Variante ein, bei der mehrere Antriebsmotoren vorgesehen sind, insbesondere jeweils ein Antriebsmotor an jedem Ende der Tragwelle.

Wenn in der vorliegenden Anmeldung von einem Antriebsmotor die Rede ist, dann meint das stets den Antriebsmotor als solchen einschließlich des Abtriebselementes des Antriebsmotors, beispielsweise einer drehenden Abtriebswelle oder eines linear ausfahrbaren und einfahrbaren Abtriebselementes. Dieses Abtriebselement ist gegenüber dem Korpus des Antriebsmotors relativ bewegbar und bewegt seinerseits ein Antriebselement für das Abstreifsegment.

Der Antriebsmotor ist ortsfest angeordnet, beispielsweise an einer ortsfesten Halterung, an der auch die Tragwelle drehbar gelagert ist, oder beispielsweise an einer Rahmenkonstruktion der Förderbandanlage insgesamt.

Der Antriebsmotor bringt eine drehend oder geradlinig wirkende Vorspannkraft auf die Tragwelle auf, die wiederum die Abstreifsegmente mit ihren Abstreifenden mit einer gewünschten Vorspannung an dem Förderband zur Anlage bringt. Die Vorspannung muss hoch genug sein, um am Förderband anhaftende Reste von Schüttgut sicher abzustreifen, sie darf aber auch nicht so hoch sein, dass das Förderband beschädigt wird.

Während des Betriebs verschleißt das Abstreifsegment von dem Abstreifende ausgehend, da es sich mit dem durchlaufenden Förderband in schleifendem Eingriff befindet.

Bei einer bekannten Förderband-Abstreifvorrichtung (DE 60 2004 005 771 T2) erfolgt eine umfassende Steuerung für den Antriebsmotor. Genauer gesagt sind hier zwei Antriebsmotoren vorhanden, nämlich ein erster vorzugsweise pneumatischer Antriebsmotor, der nur die Drehung der Tragwelle bewirkt, und ein zweiter, als Linearmotor ausgeführter elektrischer Antriebsmotor, der die Einheit aus erstem Antriebsmotor und Tragwelle um eine ortsfeste Schwenkachse kreisbogenförmig an das Förderband heran oder von dem Förderband weg schwenkt. Bei dieser Konstruktion ist nur der zweite Antriebsmotor ortsfest angeordnet. Durch eine Fülle von Sensoren (Drehmomentsensor, Belastungsdetektionssensor, Temperatursensor, Verschleißsensor) wird der Zustand des Abstreifsegments überwacht und durch Ansteuerung der beiden in Reihe geschalteten Antriebsmotoren wird das Abstreifende des Abstreifsegments immer mit der richtigen Andruckkraft an das Förderband angedrückt, also gegenüber dem Förderband vorgespannt.

Durch Ansteuerung der Antriebsmotoren, insbesondere des zweiten, als Linearantrieb ausgeführten elektrischen Antriebsmotors, kann das Abstreifsegment auch komplett vom Förderband freigestellt und weit weggeschwenkt werden, beispielsweise um das verschlissene Abstreifsegment auszuwechseln.

Auch wenn für das Abstreifsegment das Singular verwendet wird, so gilt alles auch für das Plural. Insbesondere ist es in der Praxis so, dass über die Breite eines Förderbandes normalerweise mehrere Abstreifsegmente nebeneinander in Reihe oder zueinander versetzt an der Tragwelle angebracht sind.

Die zuvor erläuterte, bekannte Förderband-Abstreifvorrichtung ist hinsichtlich der Regelung der Vorspannung der Abstreifsegmente kaum zu verbessern. Der hier getriebene antriebstechnische, messtechnische und regelungstechnische Aufwand ist allerdings sehr hoch. Die bekannte Förderband-Abstreifvorrichtung ist also für viele Einsatzfälle zu aufwendig.

Bekannt ist bereits eine Förderband-Abstreifvorrichtung, bei der eine verlässliche Vorgabe der Vorspannung des Abstreifsegmentes mit weniger großem Aufwand erreichbar ist (EP 0 566 486 A1). Hier ist zwischen dem Antriebselement des Antriebsmotors einerseits und der Tragwelle andererseits eine manuelle Kupplung angeordnet. Diese schafft den notwendigen Freiheitsgrad, um die Dreh-Relativlage der Tragwelle und des Antriebselementes zueinander manuell zu verstellen. In der jeweils manuell eingestellten Position lässt sich mit der manuellen Kupplung die Relativlage der Tragwelle und des Antriebselementes des Antriebsmotors fixieren.

Die Besonderheit bei dieser Spannvorrichtung besteht darin, dass die Vorspannung des Abstreifsegmentes gegenüber dem Förderband bei in einer Endstellung stehendem Antriebsmotor manuell vorgenommen werden kann. Bei jeder Antriebsbewegung des Antriebsmotors, beispielsweise aus einer Stellung, in der das Abstreifsegment komplett vom Förderband weggeschwenkt (freigestellt) ist, kann das Abstreifsegment durch Anfahren der Endstellung des Antriebsmotors wieder mit der gewünschten Vorspannung an das Förderband angestellt werden.

Eine Verstellung der Vorspannung oder ein Nachstellen wegen Verschleißes der Abstreifsegmente kann bei der hier gegebenen Konstruktion durch Lösen der manuellen Kupplung und manuelles Verstellen der Tragwelle gegenüber dem Antriebselement oder des Antriebselementes gegenüber der Tragwelle erfolgen.

Letztlich sitzt an der Stelle des ersten Antriebsmotors im anfangs beschriebenen Stand der Technik hier eine manuelle Kupplung. Dadurch ist der antriebstechnische, messtechnische und steuerungstechnische Aufwand dieser Förderband-Abstreifvorrichtung deutlich geringer.

Eine manuelle Kupplung wird von Hand bedient, das kann aber mit einem Werkzeug erfolgen, beispielsweise mit einem Schraubendreher. Besonders bevorzugt ist es allerdings, dass die manuelle Kupplung als solche von Hand ohne ein Werkzeug betätigbar ist.

Der Antriebsmotor kann bei dem hier erläuterten Stand der Technik in jeder Art ausgebildet sein. Insbesondere ist es möglich, einen hydraulischen Antriebsmotor oder einen pneumatischen Antriebsmotor zu verwenden. Genannt wird auch die Verwendung eines elektrischen Antriebsmotors.

In der Gestaltung des Antriebsmotors gibt es im Prinzip auch alle Möglichkeiten. Es kann sich beispielsweise um einen Antriebsmotor handeln, bei dem eine Abtriebswelle drehend bewegt wird. Deren Drehbewegung kann dann mittels eines Übersetzungs- oder, vorzugsweise, Untersetzungsgetriebes auf die Tragwelle übertragen werden.

Die EP 0 566 486 A1 offenbart ein Verfahren zum Betreiben einer Förderband-Abstreifvorrichtung für ein Förderband einer Förderbandanlage nach dem Oberbegriff des Anspruchs 1.

Ein Problem bei der zuvor ausführlich erläuterten Konstruktion des Standes der Technik besteht darin, dass während des Betriebs der Förderband-Abstreifvorrichtung bei Verschleiß der Abstreifsegmente die Vorspannung der Abstreifsegmente am Förderband nachlässt.

Der Lehre liegt somit das Problem zugrunde, das bekannte Verfahren zum Betreiben einer Förderband-Abstreifvorrichtung gemäß dem zuvor ausführlich erläuterten Stand der Technik so auszugestalten und weiterzubilden, dass eine nachlassende Vorspannung bei Verschleiß der Abstreifsegmente kompensiert werden kann.

Das zuvor aufgezeigte Problem ist gemäß der Erfindung bei einem Verfahren mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Voraussetzung für die Verwirklichung der Lehre der Erfindung ist die Verwendung eines elektrischen Antriebsmotors. Besonders bevorzugt ist dabei die Gestaltung als Linear-Antriebsmotor.

Erfindungsgemäß wird eine für die gewünschte Vorspannung des Abstreifendes des Abstreifsegmentes beim Anstellen gegen das Förderband erforderliche Kraftwirkung des elektrischen Antriebsmotors mittels der Steuerung über den vom elektrischen Antriebsmotor gezogenen Strom erfasst und geregelt. Dabei wird ein bestimmter Motorstrom als Grenzwert für die Vorspannung des Abstreifendes des Abstreifsegmentes am Förderband eingestellt. Der elektrische Antriebsmotor wird in bestimmten oder bestimmbaren Zeitabständen immer wieder an das Förderband angefahren, jeweils bis der als Grenzwert für die Vorspannung eingestellte Motorstrom erreicht ist. Dadurch wird die bei Verschleiß der Abstreifsegmente nachlassende Vorspannung der Abstreifenden der Abstreifsegmente am Förderband kompensiert.

Auf diese Weise verbindet man die Vorteile einer manuellen Einstellung und einer elektrischen Regelung des elektrischen Antriebsmotors miteinander.

Besonders bevorzugt ist hinsichtlich der manuellen Verstellung das Verstellen der Dreh-Relativlage durch manuelles Drehen der Tragwelle bei unveränderter Position des Antriebselementes. Man kann beispielsweise die Tragwelle mit einem Drehmomentschlüssel so weit drehen, dass die gewünschte Vorspannung der Abstreifsegmente erreicht ist. Dann lässt man die manuelle Kupplung wieder einfallen, so dass diese Relativlage des Antriebselementes gegenüber der Tragwelle fixiert ist.

Besonders bevorzugt ist dabei, dass die manuelle Kupplung mit der Tragwelle drehfest und mit dem Antriebselement manuell verstellbar und fixierbar verbunden ist.

Weiter von besonderem Vorteil ist eine Konstruktion der Kupplung dergestalt, dass das Verbinden der Kupplung mit dem Antriebselement eine in Stufen einstellbare Rastung und eine stufenlose Feineinstellung aufweist. Eine solche Kombination erlaubt eine schnelle Grobeinstellung durch einfaches Auswählen einer neuen Raste, erlaubt aber auch eine Feinjustierung, die dann im Anschluss stufenlos erfolgt. Die Feineinstellung erfolgt zweckmäßigerweise durch entsprechende Einstellschrauben.

Für die Anordnung des Antriebselementes gibt es natürlich eine Fülle von Möglichkeiten. Die Ausführung des Antriebselementes als ein Getriebezahnrad eines Untersetzungsgetriebes ist als ein Beispiel oben bereits genannt worden. Konstruktiv hat es sich als besonders zweckmäßig erwiesen, dass das Antriebselement ein auf der Tragwelle frei drehbar gelagerter Hebel ist. Grundsätzlich kann das Antriebselement auch in das Abtriebselement des Antriebsmotors integriert sein.

Die Konstruktion mit dem frei drehbar gelagerten Hebel als Antriebselement gewinnt eine weitere Bedeutung in der Gesamtanordnung, bei der die Halterung einen Hauptträger mit einem ersten Ende und einem zweiten Ende aufweist. Das erste Ende ist bei einer vertikalen Anordnung des Hauptträgers das obere Ende, das zweite Ende ist das untere Ende. Die Tragwelle ist zweckmäßigerweise am zweiten Ende mittels des Haltelagers im Hauptträger gelagert. Das als Hebel ausgeführte Antriebselement ragt am zweiten Ende seitlich vom Hauptträger ab. Damit schafft man eine winkelförmige Anordnung, die es erlaubt, dass der Antriebsmotor zwischen dem ersten Ende des Hauptträgers und dem freien Ende des Antriebselementes angebracht ist. Damit hat die gesamte Anordnung die Form eines Dreiecks. Das ist sehr zweckmäßig, denn durch Anbringen des Hauptträgers mit den Anbauteilen kann man die Konstruktion schnell an der Förderbandanlage anbringen.

Besonders zweckmäßig ist das erfindungsgemäße Verfahren einsetzbar, wenn der Antriebsmotor zwei Endstellungen aufweist, nämlich eine erste Endstellung in Anstellrichtung und eine zweite Endstellung in Freistellrichtung, vor dem motorischen Anstellen des Abstreifendes des Abstreifsegmentes an das Förderband der Antriebsmotor in seine erste Endstellung gebracht wird und, mit dem Antriebsmotor in der ersten Endstellung, das Abstreifsegment mit seinem Abstreifende durch Kraftangriff an der Tragwelle unter Nutzung der manuellen Kupplung mit der gewünschten Vorspannung an das Förderband angestellt und in der so eingestellten Position mittels der manuellen Kupplung fixiert wird.

Mit der zuvor beschriebenen Konstruktion kommt man ohne besondere Sensoren aus.

Im Folgenden wird die Erfindung nun anhand einer bevorzugte Ausführungsbeispiele darstellenden Zeichnung näher erläutert. In der Zeichnung zeigt
- Fig. 1:: in einer perspektivischen, stark schematisch vereinfachten Darstellung das Grundprinzip einer Förderband-Abstreifvorrichtung für ein Förderband einer Förderbandanlage,
- Fig. 2:: in einer Seitenansicht die typischen Förderband-Abstreifvorrichtungen an einem Förderband,
- Fig. 3 - 9:: verschiedene Positionen einer Förderband-Abstreifvorrichtung,
- Fig. 10:: in einer vergrößerten Darstellung eine manuelle Kupplung wie sie bei einer Förderband-Abstreifvorrichtung regelmäßig eingesetzt sein kann.

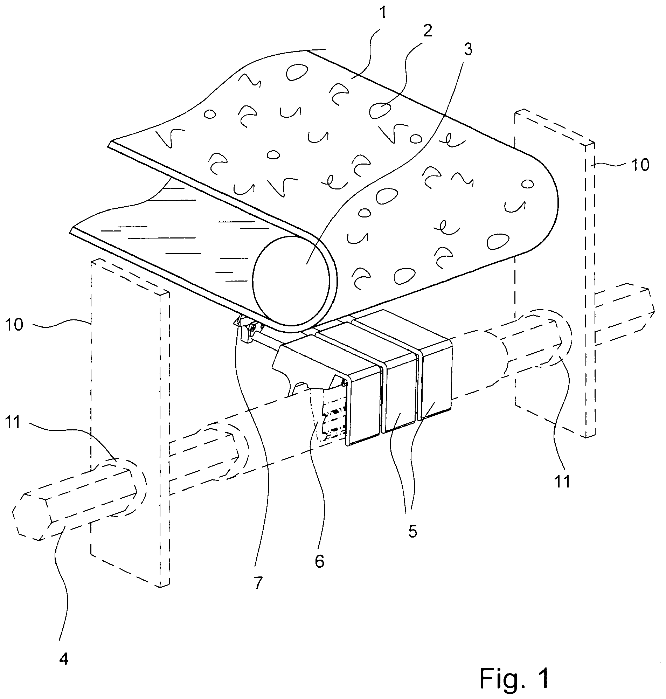

Fig. 1 zeigt in schematischer Ansicht ein Förderband 1 einer Förderbandanlage, auf dem sich Schüttgut 2 befindet. Dieses Förderband 1 läuft von links nach rechts in Fig. 1. Es wird an einer Umlenkwalze 3 umgelenkt, so dass sein unterer Bandabschnitt, das Untertrum, zum Ausgangspunkt zurücklaufen kann.

Unterhalb des Förderbandes 1 und nicht weit von der Umlenkwalze 3 sieht man eine Tragwelle 4 der Förderband-Abstreifvorrichtung. Die Tragwelle 4 hat im Querschnitt Sechskantform. Auf der Tragwelle 4 sind beispielhaft drei Abstreifsegmente 5 angeordnet. Im Stand der Technik werden hier verschiedene Anbringungsvarianten beschrieben. Dazu darf auf den einleitend genannten Stand der Technik verwiesen werden, aber auch auf die DE 20 2009 004 182 U1 und die DE 20 2012 010 945 U1. Auf die Art der Anbringung der Abstreifsegmente 5 an der Tragwelle 4 kommt es für die Lehre der Erfindung nicht an.

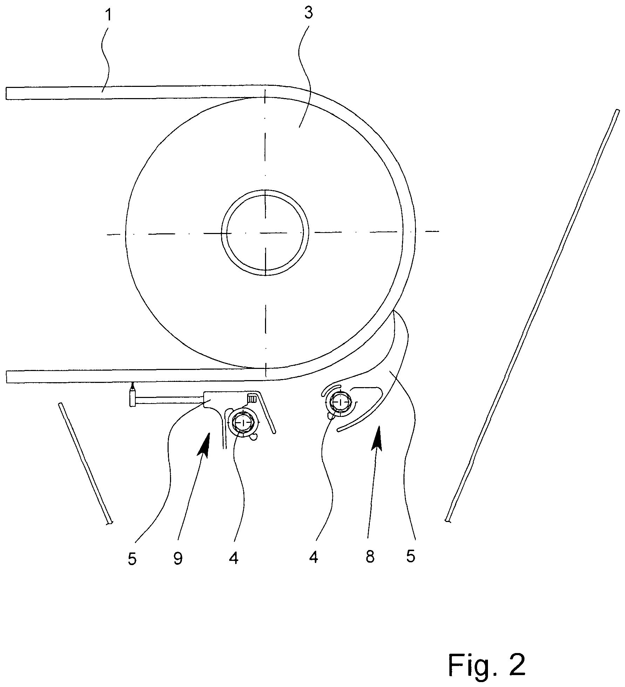

Wesentlich ist, dass das Abstreifsegment 5 (Singular steht auch hier für Plural) ein formschlüssig Drehmoment übertragend mit der Tragwelle 4 verbundenes Halteende 6 und ein gegenüber vom Halteende 6 befindliches Abstreifende 7 aufweist. Fig. 1 zeigt dabei einen Sekundärabstreifer, bei dem das Abstreifende 7 des Abstreifsegmentes 5 am Untertrum etwas hinter der Umlenkwalze 3 am Förderband 1 angestellt ist. Fig. 2 zeigt rechts einen Primärabstreifer 8 und links einen Sekundärabstreifer 9 wie er in Fig. 1 dargestellt ist.

Fig. 1 lässt ferner links und rechts jeweils eine ortsfeste Halterung 10 mit jeweils einem an der Halterung 10 angeordneten Haltelager 11 erkennen, in denen die Tragwelle 4 im dargestellten Ausführungsbeispiel drehbar gelagert ist.

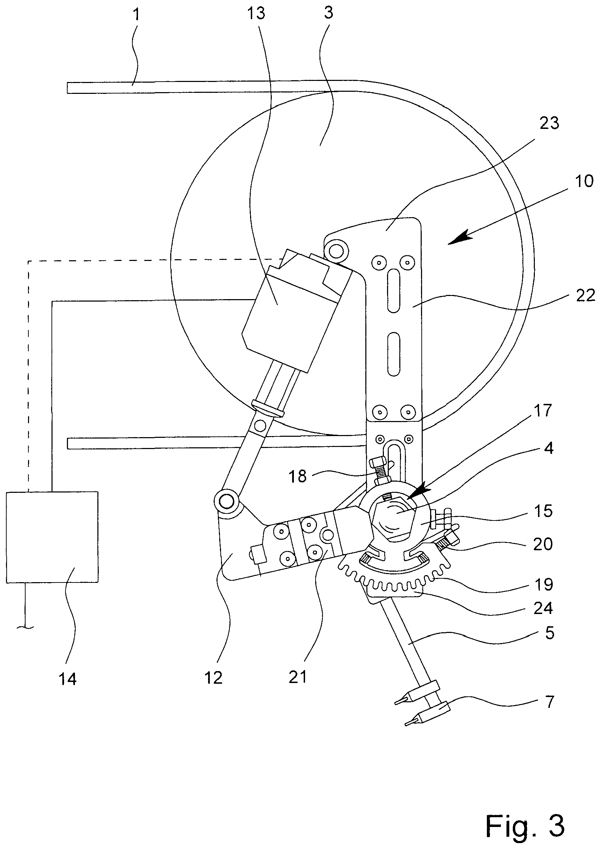

Fig. 1 zeigt noch keinen Antrieb für die Tragwelle 4. Hier müssen wir Fig. 3 und Fig. 4 - 9 heranziehen.

Vorgesehen ist mindestens ein an der Tragwelle 4, und zwar vorzugsweise an einem Ende der Tragwelle 4, Drehmoment übertragend angekoppeltes Antriebselement 12 eines elektrischen Antriebsmotors 13. In Fig. 3 ist schematisch auch eine Steuerung 14 für den elektrischen Antriebsmotor 13 eingezeichnet. Typischerweise ist eine solche Steuerung heutzutage eine elektronische Steuerung, insbesondere mit einer entsprechenden Steuerungssoftware.

Durch entsprechende Ansteuerung des elektrischen Antriebsmotors 13 ist das Abstreifsegment 5 mit seinem Abstreifende 7 an das Förderband 1 anstellbar oder von dem Förderband 1 freistellbar, also von dem Förderband 1 entfernbar. Der elektrische Antriebsmotor 13 selbst ist ortsfest angeordnet, beispielsweise an der ortsfesten Halterung 10 oder beispielsweise an einer Rahmenkonstruktion der Förderbandanlage insgesamt. Das Abtriebselement des elektrischen Antriebsmotors 13 ist mit dem Antriebselement 12 in passender Weise gekoppelt.

Die Darstellung in Fig. 3 - 9 zeigt wiederum den in Fig. 1 und 2 angedeuteten Sekundärabstreifer 9.

Der elektrische Antriebsmotor 13 kann eine beliebige Ausgestaltung haben, ist aber vorzugsweise ein elektrischer Linear-Antriebsmotor 13. Auf dieses Beispiel stellt auch Fig. 3 - 9 ab.

In der Darstellung in Fig. 3 ist das Abtriebselement des Linear-Antriebsmotors 13 ausgefahren, das Abstreifsegment 5 ist vom Förderband 1 nach unten so weit wie möglich weggeschwenkt.

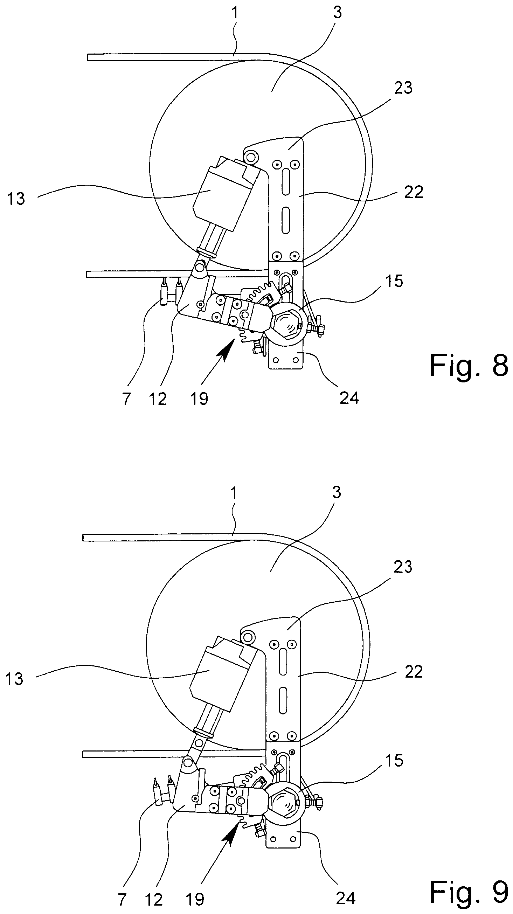

In Fig. 8 ist das Abtriebselement des Linear-Antriebsmotors 13 komplett eingefahren und das Abstreifsegment 5 ist mit seinem Abstreifende 7 an das Förderband 1 angestellt.

Wesentlich für die Erfindung ist nun, dass zwischen dem Antriebselement 12 des elektrischen Antriebsmotors 13 einerseits und der Tragwelle 4 andererseits eine manuelle Kupplung 15 angeordnet ist. Unter Nutzung der Kupplung 15 ist die Dreh-Relativlage der Tragwelle 4 und des Antriebselementes 12 des elektrischen Antriebsmotors 13 zueinander manuell verstellbar. In der jeweils eingestellten Position ist die Dreh-Relativlage dann mittels der Kupplung 15 fixierbar.

Fig. 3 - 9 zeigen den zuvor geschilderten Zusammenhang in einzelnen Beispielen.

In Fig. 3 ist, wie bereits erwähnt, das Abstreifsegment 5 mit dem Abstreifende 7 vom Förderband 1 komplett weggeschwenkt. Das ist dadurch erfolgt, dass das Abtriebselement des elektrischen Antriebsmotors 13, der hier ein elektrischer Linear-Antriebsmotor ist, voll ausgefahren ist.

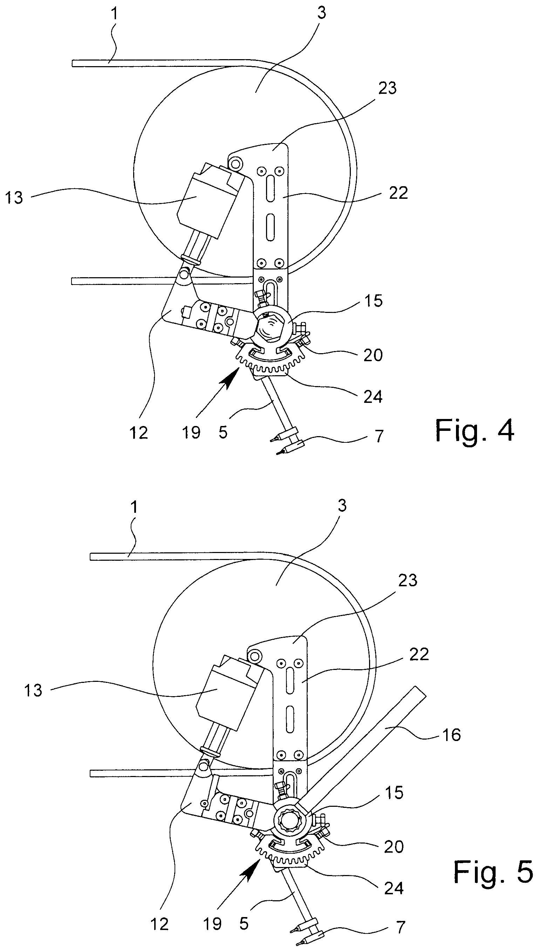

In Fig. 4 sieht man dieselbe Stellung des Abstreifsegments 5 wie in Fig. 3, allerdings ist das Abtriebselement des elektrischen Antriebsmotors 13 komplett eingefahren und das Antriebselement 12 ist gegenüber Fig. 3 nach oben geschwenkt worden. Das ist möglich, weil die manuelle Kupplung 15 ausgekuppelt ist.

Fig. 5 zeigt die gleiche Position wie Fig. 4. Jetzt ist an der Tragwelle 4 ein Spannschlüssel 16, insbesondere in Form eines Drehmomentschlüssels, angesetzt worden.

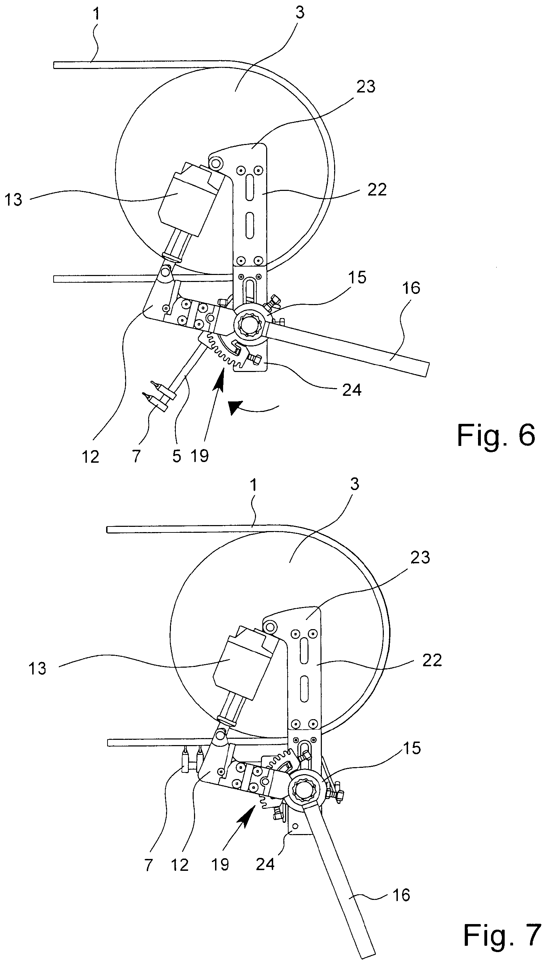

Fig. 6 unterscheidet sich von Fig. 5 dadurch, dass mittels des Spannschlüssels 16 die Tragwelle 4 und mit ihr das Abstreifsegment 5 im Uhrzeigersinn geschwenkt worden sind, angedeutet durch den Pfeil in Fig. 6. Die manuelle Kupplung 15 ist in der äußersten Lage eingekuppelt worden. In dieser Position ist das Abtriebselement des elektrischen Antriebsmotors 13 nach wie vor komplett eingefahren.

In Fig. 7 ist das Abtriebselement des Antriebsmotors 13 weiterhin komplett eingefahren. Durch weiteres Schwenken des Spannschlüssels 16 im Uhrzeigersinn ist auch das Abstreifsegment 5 weiter im Uhrzeigersinn geschwenkt worden. Das Abstreifende 7 des Abstreifsegmentes 5 ist mit der gewünschten Vorspannung, die durch die Kraftaufbringung mittels des Spannschlüssels 16 auf die Tragwelle 4 eingestellt wird, gegenüber dem Förderband 1 vorgespannt worden.

Mittels des Spannschlüssels 16 wird die Tragwelle 4 in der gewünschten, in Fig. 7 gezeigten Position gehalten. Die manuelle Kupplung 15 wird eingekuppelt. Dann wird der Spannschlüssel 16 abgezogen. Das ist in Fig. 8 dargestellt. Der gewünschte Endzustand der Vorspannung ist jetzt erreicht.

Wenn ausgehend von der Darstellung in Fig. 8 nun das Abtriebselement des elektrischen Antriebsmotors 13 ausgefahren wird (wie beispielsweise in Fig. 3 gezeigt), wird das Abstreifsegment 5 bei unverändert eingekuppelter manueller Kupplung 15 vom Förderband 1 weggeschwenkt. Wird das Abtriebselement des elektrischen Antriebsmotors 13 danach wieder eingefahren, so wird das Abstreifende 7 des Abstreifsegmentes 5 wegen der Fixierung der Relativlage von Tragwelle 4 und Antriebselement 12 mittels der manuellen Kupplung 15 genau mit der manuell voreingestellten Vorspannung wieder an das Förderband 1 angestellt. Der elektrische Antriebsmotor 13 wird in diesem Fall wieder in seine Endposition gefahren.

Fig. 9 zeigt eine Wartungsposition für das Abstreifsegment 5, bei dem das Abtriebselement des elektrischen Antriebsmotors 13 ein wenig ausgefahren ist. An dem Einkuppelzustand der manuellen Kupplung 15 hat sich dabei nichts geändert.

Die Darstellung, die zuvor gegeben worden ist, macht deutlich, dass im hier dargestellten Ausführungsbeispiel das Verstellen der Dreh-Relativlage durch manuelles Drehen der Tragwelle 4 bei unveränderter Position des Antriebselementes 12 ausgeführt wird.

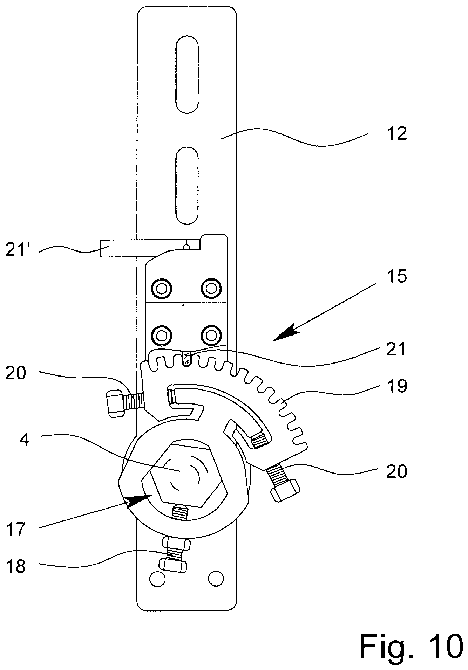

In Fig. 3 ist eine komplette Darstellung des Antriebs gezeigt. In Fig. 10 ist eine vergrößerte Darstellung nur der manuellen Kupplung 15 auf der Tragwelle 4 in Verbindung mit dem Antriebselement 12 gezeigt.

Im dargestellten und insoweit bevorzugten Ausführungsbeispiel ist vorgesehen, dass die manuelle Kupplung 15 mit der Tragwelle 4 drehfest und mit dem Antriebselement 12 manuell verstellbar und fixierbar verbunden ist. Für die drehfeste Verbindung der manuellen Kupplung 15 mit der Tragwelle 4 sieht man eine Mehrkant-Ausnehmung 17 in der manuellen Kupplung 15 und darin eine Fixierschraube 18. Diese presst zwei Flächen der Tragwelle 4 in die entsprechenden Flächen der Mehrkant-Ausnehmung 17 und sorgt so für eine drehfeste Verbindung der manuellen Kupplung 15 mit der Tragwelle 4. Die Fixierschraube 18 erlaubt es dabei, Tragwellen 4 unterschiedlicher Größe mit ein und derselben manuellen Kupplung 15 auszurüsten.

Die manuell verstellbare und fixierbare Verbindung der manuellen Kupplung 15 mit dem Antriebselement 12 ergibt sich im oberen Bereich etwas oberhalb der Tragwelle 4. Dazu ist hier nach bevorzugter Lehre vorgesehen, dass das Verbinden der Kupplung 15 mit dem Antriebselement 12 eine in Stufen einstellbare Rastung 19 und eine stufenlose Feineinstellung 20 aufweist. Man sieht den teilkreisförmigen Zahnbogen der Rastung 19 und oberhalb des Zahnbogens der Rastung 19 einen von oben in die Rastung 19 an der entsprechenden Stelle eingreifenden Rastbolzen 21, der am Antriebselement 12 festgelegt ist. Die Darstellung in Fig. 10 zeigt den in der Rastung 19 sitzenden Rastbolzen 21. Dadurch ist die Relativlage der manuellen Kupplung 15 gegenüber dem Antriebselement 12 fixiert.

Die manuelle Kupplung 15 ist hier allein von Hand, also ohne Werkzeug betätigbar. Dazu dient der Zuggriff 21', mit dem man den Rastbolzen 21 in Fig. 10 nach oben ziehen kann.

Zieht man den Rastbolzen 21 in Fig. 10 mit dem Zuggriff 21' nach oben, so kommt er außer Eingriff mit der Rastung 19 und das Antriebselement 12 kann gegenüber dem Zahnbogen der Rastung 19 nach rechts oder links geschwenkt werden. Lässt man den Zuggriff 21' anschließend wieder los, so wird der Rastbolzen 21 gemäß bevorzugter Ausführung mittels Federkraft in die Rastung 19 zurückgedrückt.

Sitzt der Rastbolzen 21, wie in Fig. 10 dargestellt, in der Rastung 19, so kann man noch die Feineinstellung 20 mittels der beiden links und rechts sitzenden Einstellschrauben vornehmen. Will man in Fig. 10 das Antriebselement 12 gegenüber der Tragwelle 4 nach links schwenken, so schraubt man die linke Einstellschraube der Feineinstellung 20 ein und die rechte Schraube heraus. Will man nach rechts schwenken, so macht man das umgekehrt.

Fig. 3 (und Fig. 4 - 9) zeigen für die Gesamtanordnung der Halterung 10 eine Konstruktion, bei der vorgesehen ist, dass die Halterung 10 mindestens einen Hauptträger 22 mit einem ersten, vorzugsweise oberen Ende 23 und einem zweiten, vorzugsweise unteren Ende 24 aufweist. Die Tragwelle 4 ist am zweiten Ende 24 im Haltelager 11 gelagert. Das als Hebel ausgeführte Antriebselement 12 ragt am zweiten Ende 24 seitlich vom Hauptträger 22 ab und der Antriebsmotor 13 ist zwischen dem ersten Ende 23 des Hauptträgers 22 und dem freien Ende des Antriebselementes 12 angebracht. Auf diese Weise hat die gesamte Anordnung die Form eines Dreiecks. Sie kann insgesamt leicht gehandhabt werden, indem der Hauptträger 22 der Halterung 10 an der gewünschten Stelle an der Förderbandanlage fest angebracht wird.

Was die in Fig. 3 und Fig. 10 dargestellte manuelle Kupplung 15 mit dem Antriebselement 12 betrifft, so lässt sich das Antriebselement 12 auf verschiedene Arten konstruieren. Es muss also nicht zwingend eine Streifenform haben. Es kann unterschiedliche Längen, Breiten und Dicken aufweisen, alles je nach dem konstruktiven Aufbau der konkreten Förderband-Abstreifvorrichtung.

Auch die manuelle Kupplung 15 insgesamt kann auf unterschiedliche Arten realisiert werden, die ein Fachmann je nach Anmeldungsfall und Umständen passend wählen wird.

Die Darstellung in Fig. 3 - 9, die zuvor ausführlich erläutert worden ist, erlaubt folgende erfindungsgemäße Betriebsweise der Förderband-Abstreifvorrichtung:
Der Antriebsmotor 13 weist mit seinem Abtriebselement zwei Endstellungen auf, nämlich eine erste Endstellung in Anstellrichtung und eine zweite Endstellung in Freistellrichtung. Zum Anstellen des Abstreifendes 7 des Abstreifsegmentes 5 an das Förderband 1 wird der Antriebsmotor 13 in seine erste Endstellung gebracht. Mit dem elektrischen Antriebsmotor 13 in der ersten Endstellung wird das Abstreifsegment 5 mit seinem Abstreifende 7 durch Kraftangriff an der Tragwelle 4 unter Nutzung der manuellen Kupplung 15 mit der gewünschten Vorspannung an das Förderband 1 angestellt. In der dann eingestellten Position wird die Tragwelle 4 mit dem Abstreifsegment 5 mittels der manuellen Kupplung 15 fixiert. Das hat den weiter oben bereits erwähnten Vorteil, dass auch bei voll eingefahrenem elektrischen Antriebsmotor 13 die Vorspannung des Abstreifendes 7 des Abstreifsegmentes 5 am Förderband 1 nicht höher werden kann als manuell unter Nutzung der Kupplung 15 eingestellt.

Die für die gewünschte Vorspannung des Abstreifendes 7 des Abstreifsegmentes 5 erforderliche Kraftwirkung des elektrischen Antriebsmotors 13 wird mittels der Steuerung 14 über den vom Antriebsmotor 13 gezogenen Strom erfasst und geregelt. Dies ist in Fig. 3 mit der dort eingezeichneten Steuerung 14 durch die gestrichelte Linie vom Antriebsmotor 13 zur Steuerung 14 angedeutet.

### Bezugszeichenliste:

- 1: Förderband
- 2: Schüttgut
- 3: Umlenkwalze
- 4: Tragwelle
- 5: Abstreifsegment
- 6: Halteende
- 7: Abstreifende
- 8: Primärabstreifer
- 9: Sekundärabstreifer
- 10: Halterung
- 11: Haltelager
- 12: Antriebselement
- 13: Antriebsmotor
- 14: Steuerung
- 15: manuelle Kupplung
- 16: Spannschlüssel
- 17: Mehrkant-Ausnehmung
- 18: Fixierschraube
- 19: Rastung
- 20: Feineinstellung
- 21: Rastbolzen
- 21': Zuggriff
- 22: Hauptträger
- 23: oberes Ende
- 24: unteres Ende

## Patentansprüche

1. Verfahren zum Betreiben einer Förderband-Abstreifvorrichtung für ein Förderband (1) einer Förderbandanlage, wobei die Förderband-Abstreifvorrichtung aufweist:
- eine Tragwelle (4) und mindestens ein auf der Tragwelle (4) angeordnetes Abstreifsegment (5), wobei das Abstreifsegment (5) ein formschlüssig Drehmoment übertragend mit der Tragwelle (4) verbundenes Halteende (6) und ein gegenüber vom Halteende (6) befindliches Abstreifende (7) aufweist,
- mindestens ein an einer ortsfesten Halterung (10) angeordnetes Haltelager (11), in dem die Tragwelle (4) drehbar gelagert ist,
- mindestens ein an der Tragwelle (4) Drehmoment übertragend angekoppeltes Antriebselement (12) eines ortsfest angeordneten elektrischen Antriebsmotors (13) und
- eine Steuerung (14) für den elektrischen Antriebsmotor (13),
wobei durch Ansteuerung des elektrischen Antriebsmotors (13) und entsprechendes Bewegen des Antriebselementes (12) das Abstreifsegment (5) mit seinem Abstreifende (7) an das Förderband (1) angestellt oder von dem Förderband (1) freigestellt wird,
**gekennzeichnet durch folgende Verfahrensmerkmale:**
eine für die gewünschte Vorspannung des Abstreifendes (7) des Abstreifsegmentes (5) beim Anstellen gegen das Förderband (1) erforderliche Kraftwirkung des elektrischen Antriebsmotors (13) wird mittels der Steuerung (14) über den vom elektrischen Antriebsmotor (13) gezogenen Strom erfasst und geregelt,
ein bestimmter Motorstrom wird als Grenzwert für die Vorspannung des Abstreifendes (7) des Abstreifsegmentes (5) eingestellt, und
der elektrische Antriebsmotor (13) wird in bestimmten oder bestimmbaren Zeitabständen immer wieder an das Förderband (1) angefahren, jeweils bis der als Grenzwert für die Vorspannung eingestellte Motorstrom erreicht ist.

2. Verfahren nach Anspruch 1, **dadurch gekennzeichnet,**
**dass** zwischen dem Antriebselement (12) des Antriebsmotors (13) und der Tragwelle (4) eine manuelle Kupplung (15) angeordnet ist und die Dreh-Relativlage der Tragwelle (4) und des Antriebselementes (12) zueinander manuell verstellt und in der jeweils eingestellten Position fixiert wird.

3. Verfahren nach Anspruch 2, **dadurch gekennzeichnet,**
**dass** die Dreh-Relativlage durch manuelles Drehen der Tragwelle (4) bei unveränderter Position des Antriebselementes (12) verstellt wird.

4. Verfahren nach Anspruch 2 oder 3, **dadurch gekennzeichnet,**
**dass** der elektrische Antriebsmotor (13) zwei Endstellungen aufweist, nämlich eine erste Endstellung in Anstellrichtung und eine zweite Endstellung in Freistellrichtung,
**dass** vor dem motorischen Anstellen des Abstreifendes (7) des Abstreifsegmentes (5) an das Förderband (1) der elektrische Antriebsmotor (13) in seine erste Endstellung gebracht wird, und
**dass**, bei in der ersten Endstellung stehendem elektrischen Antriebsmotor (13), das Abstreifsegment (5) mit seinem Abstreifende (7) durch Kraftangriff an der Tragwelle (4) unter Nutzung der manuellen Kupplung (15) mit der gewünschten Vorspannung an das Förderband (1) angestellt und in der so eingestellten Position mittels der manuellen Kupplung (15) fixiert wird.

## Claims

1. Method for operating a conveyor belt scraping device for a conveyor belt (1) of a conveyor belt system, the conveyor belt scraping device having:
- a support shaft (4) and at least one scraping segment (5) arranged on the support shaft (4), wherein the scraping segment (5) comprises a holding end (6), which is connected to the support shaft (4) in a positively locking manner so as to transmit torque, and a scraping end (7) which is situated opposite the holding end (6),
- at least one holding bearing (11), which is arranged on a stationary mounting (10) and in which the support shaft (4) is rotatably mounted,
- at least one drive element (12) of an immovably arranged electric drive motor (13), which is coupled on the support shaft (4) so as to transmit torque, and
- a control means (14) for the electric drive motor (13),
wherein, as a result of actuating the electric drive motor (13) and correspondingly moving the drive element (12), the scraping segment (5) is placed with its scraping end (7) against the conveyor belt (1) or is released from the conveyor belt (1), **characterized by the following method features** an application of force of the electric drive motor (13) necessary for the desired pretension of the scraping end (7) of the scraping segment (5) when placing it against the conveyor belt (1) is determined and regulated by means of the control means (14) via the current drawn from the electric drive motor (13),
a determined motor current is set as a boundary value for the pretension of the scraping end (7) of the scraping segment (5), and
the electric drive motor (13) is driven again and again, at determined or determinable time intervals against the conveyor belt (1), in each case until the motor current which is set as a boundary value for the pretension is reached.

2. Method according to Claim 1,**characterized in that** a manual coupling (15) is arranged between the drive element (12) of the drive motor (13) and the support shaft (4) and the relative rotational position of the support shaft (4) and of the drive element (12) with respect to one another is manually adjusted and fixed in the respectively adjusted position.

3. Method according the Claim 2, **characterized in that** the relative rotational position is adjusted as a result of manually rotating the support shaft (4) with the position of the drive element (12) unchanged.

4. Method according to Claim 2 or 3, **characterized in that** the electric drive motor (13) comprises two end positions, namely a first end position in the placing direction and a second end position in the releasing direction,
**in that**, before the motorized placing of the scraping end (7) of the scraping segment (5) against the conveyor belt (1), the electric drive motor (13) is moved into its first end position, and,
**in that**, with the electric drive motor (13) in the first end position, the scraping segment (5) is placed with its scraping end (7) against the conveyor belt (1) at the desired pretension as a result of the application of force on the support shaft (4) by utilizing the manual coupling (15) and is fixed in the thus adjusted position by means of the manual coupling (15).

## Revendications

1. Procédé pour faire fonctionner un dispositif de raclage de bande transporteuse pour une bande transporteuse (1) d'une installation de bande transporteuse, le dispositif de raclage de bande transporteuse présentant :
- un arbre de support (4) et au moins un segment de raclage (5) disposé sur l'arbre de support (4), le segment de raclage (5) présentant une extrémité de retenue (6) connectée par engagement positif en transmettant le couple à l'arbre de support (4) et une extrémité de raclage (7) se trouvant à l'opposé de l'extrémité de retenue (6),
- au moins un support de retenue (11) disposé sur une fixation fixe (10), dans lequel l'arbre de support (4) est supporté à rotation,
- au moins un élément d'entraînement (12) d'un moteur d'entraînement électrique (13) disposé fixement, accouplé en transmettant le couple à l'arbre de support (4), et
- une commande (14) pour le moteur d'entraînement électrique (13),
le segment de raclage (5) avec son extrémité de raclage (7), par commande du moteur d'entraînement électrique (13) et déplacement correspondant de l'élément d'entraînement (12), étant engagé contre la bande transporteuse (1) ou étant dégagé de la bande transporteuse (1),
**caractérisé par les caractéristiques de procédé suivantes :**
une application de force du moteur d'entraînement électrique (13), nécessaire pour la précontrainte souhaitée de l'extrémité de raclage (7) du segment de raclage (5) lors de l'engagement contre la bande transporteuse (1), est détectée et réglée au moyen de la commande (14) par le biais du courant prélevé par le moteur d'entraînement électrique (13),
un courant de moteur déterminé est ajusté en tant que valeur limite pour la précontrainte de l'extrémité de raclage (7) du segment de raclage (5), et
le moteur d'entraînement électrique (13) est toujours à nouveau démarré à intervalles déterminés ou déterminables au niveau de la bande transporteuse (1) à chaque fois jusqu'à ce que le courant de moteur ajusté en tant que valeur limite pour la précontrainte soit atteint.

2. Procédé selon la revendication 1, **caractérisé en ce qu'**entre l'élément d'entraînement (12) du moteur d'entraînement (13) et l'arbre de support (4) est disposé un accouplement manuel (15) et la position de rotation relative de l'arbre de support (4) et de l'élément d'entraînement (12) l'un par rapport à l'autre est réglée et fixée dans la position ajustée respective.

3. Procédé selon la revendication 2, **caractérisé en ce que** la position de rotation relative est réglée par une rotation manuelle de l'arbre de support (4) sans changer la position de l'élément d'entraînement (12).

4. Procédé selon la revendication 2 ou 3, **caractérisé en ce que** le moteur d'entraînement électrique (13) présente deux positions d'extrémité, à savoir une première position d'extrémité dans le sens de l'engagement et une deuxième position d'extrémité dans le sens du désengagement,
**en ce qu'**avant l'engagement motorisé de l'extrémité de raclage (7) du segment de raclage (5) avec la bande transporteuse (1), le moteur d'entraînement électrique (13) est amené dans sa première position d'extrémité, et
**en ce que** lorsque le moteur d'entraînement électrique (13) se trouve dans la première position d'extrémité, le segment de raclage (5), avec son extrémité de raclage (7), est engagé avec la précontrainte souhaitée contre la bande transporteuse (1) par application de force au niveau de l'arbre de support (4) en utilisant l'accouplement manuel (15), et est fixé dans la position ainsi ajustée au moyen de l'accouplement manuel (15).
